# EUROPÄISCHE PATENTSCHRIFT

(11) **EP 0 665 622 B1**
(45) Veröffentlichungstag und Bekanntmachung des Hinweises auf die Patenterteilung: **10.09.1997**
(21) Anmeldenummer: 95100635.2
(22) Anmeldetag: 18.01.1995
(51) Int. Cl.: H02G 15/18, H02G 15/013

(54) **Dichtungsformstück für wärmeschrumpfbare Umhüllungen**
Preformed sealing piece for heat shrinkable enclosures
Pièce formée d'étanchéité pour enveloppes thermorétractables

(30) Priorität: 26.01.1994 DE 4402261
(43) Veröffentlichungstag der Anmeldung: 02.08.1995
(73) Patentinhaber: RXS Kabelgarnituren Gesellschaft mit beschränkter Haftung, D-58093 Hagen (DE)
(72) Erfinder: Winterhoff, Hans, Dipl.-Ing., D-58239 Schwerte (DE); Kluwe , Wolf, Dipl.-Ing., D-58119 Hagen (DE)
(74) Vertreter: Fuchs, Franz-Josef, Dr.-Ing.

(56) Entgegenhaltungen:
- EP-A- 0 057 742
- EP-A- 0 265 259
- GB-A- 2 195 840

## Beschreibung

Die Erfindung betrifft ein Dichtungsformstück zur stirnseitigen Abdichtung einer wärmeschrumpfbaren Umhüllung für langgestreckte Gegenstände, bestehend aus einem Dichtteil aus wärmeschmelzbarem Material und aus Wärmeleitkörpern aus wärmeleitfähigem Material.

Ein Dichtungsformstück dieser Art ist aus der britischen Patentschrift GB-A-2 195 840 bekannt. Dort wird das Dichtungsformstück aus einem Block aus wärmeschmelzbarem Material gebildet, in den Wärmeleitkörper eingelagert werden. Dieses Dichtungsformstück weist kreisförmige Aussparungen auf, die sich in Längsrichtung erstrecken. In diese kreisförmigen Aussparungen können langgestreckte Gegenstände eingeführt werden, wobei die Durchmesser dieser Gegenstände etwa dem Durchmesser der Aussparungen entsprechen müssen, da sonst die Fixierung bei der Montage Schwierigkeiten bereitet. Außerdem verlaufen zusätzliche Aussparungen am äußeren Umfang des Dichtungsformstückes, in welche Wärmeleitkörper eingelegt und mit einem Band aus Schmelzkleber fixiert werden können. Diese Ausbildung ist relativ aufwendig und die Fixierung bei der Montage schwierig, da das Band im normalen Temperaturbereich nicht klebt. Weiterhin ist durch die Anordnung der Wärmeleitkörper nicht gewährleistet, daß das Dichtungsformstück bei Erwärmung ausreichend bis zum Zentrum durchschmilzt und einwandfrei abdichtet.

Aufgabe vorliegender Erfindung ist nun, ein Dichtungsformstück zu schaffen, mit dem die beschriebenen Nachteile vermieden werden, so daß eine einfache Montage mit Fixierung aller Teile, eine sichere Durchwärmung und Aufschmelzung des Dichtmaterials gewährleistet ist. Die gestellte Aufgabe wird nun mit einem Dichtungsformstück der eingangs beschriebenen Art dadurch gelöst, daß das Dichtteil aus zwei Lamellenkörpern und einem Mittelstück besteht, daß die Lamellenkörper C-förmigen Querschnitt aufweisen und gegeneinanderliegend mit ihren Rückseiten das Mittelstück bilden, daß die Enden der Lamellenkörper jeweils nach einwärts gerichtet sind, daß im Mittelstück mindestens eine von den zwischen den C-förmigen Lamellenkörpern befindlichen Zwickelbereichen ausgehende und bis ins Zentrum reichende Klemmnut angeordnet ist, daß mindestens ein Wärmeleitkörper in der Klemmnut fixierbar ist, daß der Wärmeleitkörper sich über die Länge des Dichtungsformstückes hinweg zumindest teilweise erstreckt, daß der Wärmeleitkörper im Zwickelbereich zwischen den C-förmigen Lamellenkörpern einen Querschnitt aufweist, der sich vom äußeren Umfang des Dichtungsformstückes her zum Zentrum des Mittelstückes des Dichtteils hin verjüngt, daß das verjüngte Ende des Wärmeleitkörpers im Bereich der Klemmnut einen Fortsatz aufweist, der der Querschnittsform der Klemmnut angepaßt ist.

Die Dichtungsformstücke gemäß der Erfindung zeigen nun gegenüber dem Stand der Technik bezüglich der Dichtungssicherheit und der Montage erhebliche Vorteile, die mit dem Stand der Technik nicht zu erreichen sind. So wird die Montage des Dichtungsformstückes wesentlich erleichtert, da das Dichtungsformstück mit all seinen Einzelteilen bereits an den einzuführenden Gegenständen sofort fixierbar ist, wobei gleichgültig ist, ob es sich um Gegenstände mit gleichen oder unterschiedlichen Durchmessern handelt. Die Dichtungsformstücke gemäß der Erfindung bestehen aus einem schmelzbaren Dichtteil und mindestens einem Wärmeleitkörper, wobei beide Einzelteile in einfacher Weise miteinander fixiert werden können. Dies erfolgt entweder mit Hilfe eines Fortsatzes des Wärmeleitkörpers oder durch U-förmige Ausbildung des Wärmeleitkörpers durch Fixierung in einer Klemmnut des Dichtteils. Diese Klemmnut ist im Zentrum in einem Mittelstück des Dichtteiles angeordnet, so daß der Wärmeleitkörper auch bis ins Zentrum des Dichtteiles eintaucht und dadurch die Wärmeleitung bis dorthin sicher gewährleistet. Das Dichtteil wird durch zwei gegeneinander gestellte C-förmige Lamellenkörper gebildet, die über ein Mittelstück miteinander verbunden sind. Die Enden der C-förmigen Lamellenkörper sind nach einwärts gezogen und zwar so weit, daß die eingezogenen Spitzen dieser Enden gerade noch einen eingeführten Gegenstand mit minimal zulässigem Durchmesser fixieren können. Andererseits können die Enden jedoch auch soweit aufgebogen werden, daß Aussparungen gebildet werden, die die Einführung von Gegenständen mit dem größten zulässigen Durchmesser ermöglichen. In jedem Fall ist durch eine ausreichende Menge an Dichtungsmaterial gewährleistet, daß beim Aufschmelzen des Dichtungsmaterials die Stirnseite einer solchen Einführung sicher abgedichtet werden kann. Die nötige Verformung im aufgeschmolzenen Zustand des Dichtungsmaterials erfolgt durch die schrumpfende Umhüllung, die soweit vor sich geht bis die Umhüllung schließlich Tangenten zwischen den eingeführten Gegenständen bildet.

Die vollständige Aufschmelzung des Dichtteils wird gewährleistet durch das Eintauchen des Wärmeleitkörpers bis in den innersten Bereich des Dichtteiles. Bei den Wärmeleitkörpern ist von besonderem Vorteil, wenn sie aus mindestens zwei zueinander beweglichen Teilkörpern bestehen. Auf diese Weise wird gewährleistet, daß die Wärmeleitkörper im schmelzbaren Teil unabhängig voneinander bei der Verformung im Dichtbereich beweglich sind, so daß eine vorzügliche Formanpassung erreicht wird. Dies kann durch zwei völlig unabhängige Teilkörper oder durch bewegliche Verknüpfungen dieser Teilkörper erfolgen, wie anschließend bei der entsprechenden Figurenbeschreibung näher erläutert wird.

Als Material für das Dichtteil eignen sich Materialien, die als "hot-melt's" bezeichnet werden, das sind Kunststoffmaterialien, die bei einer entsprechend gewünschten Temperatur verformbar bzw. schmelzbar werden. Ein solcher Schmelzkleber ist zum Beispiel Polyamid.

Die Wärmeleitkörper gemäß der Erfindung sind für eine gute Wärmeleitung so ausgebildet, daß sie im Außenbereich möglichst großflächig ausgebildet sind, um möglichst viel und schnell Wärme aufzunehmen. Dies wird hier dadurch gewährleistet, daß die in den Zwickelbereichen zwischen den beiden C-förmigen Lamellenkörpern eingebrachten Wärmeleitkörper einen Querschnitt aufweisen, der sich vom äußeren Umfang des Dichtungsformstückes her zum Zentrum des Mittelstückes des Dichtteils hin verjüngt, wobei ein Fortsatz am inneren Ende in eine Klemmnut taucht. Im wesentlichen ist ein derartiger Querschnitt dreieckförmig, wobei die Spitze dieser Dreiecksform ins innere Zentrum des Dichtteils bis zur Klemmnut reicht. Die Wandungen sind vorzugsweise bogenförmig ausgebildet, wobei die beiden Seitenwände nach einwärts und die außen liegende Seitenwand nach auswärts gewölbt sind. Dadurch erfolgt einerseits eine gewisse Anpassung an die eingeführten zylindrischen Gegenstände und andererseits an die umgebende aufschrumpfende Umhüllung. Die Wärmeleitkörper sind aus gut wärmeleitfähigem Material, beispielsweise aus Metall wie Aluminium.

Die schrumpfbare Umhüllung weist eine Innenbeschichtung aus Schmelzkleber auf. Der Schmelzpunkt dieses Schmelzklebers kann im gleichen Bereich liegen wie der des Materials des Dichtteils. Es können jedoch auch Materialien mit unterschiedlichen Schmelzpunkten verwendet werden, wobei bevorzugt ist, wenn der Schmelzpunkt des Dichtteiles tiefer liegt als der der Innenbeschichtung der Umhüllung.

Die Wärmeleitkörper können gleichlang, kürzer oder auch länger sein als das Dichtteil. Dies richtet sich nach Forderungen bezüglich der Wärmeleitung, der Berührungssicherheit, einer eventuell erforderlichen elektrischen Isolation oder dergleichen.

Die Dichtungsformstücke gemäß der Erfindung können bei Umhüllungen eingesetzt werden, die mit Verzweigungen oder Mehrfacheinführungen zu versehen sind. Dabei ist nicht von Bedeutung, welche langgestreckten Gegenstände eingeführt werden, so können Rohre für die verschiedensten Zwecke wie auch Kabel der verschiedensten Bereiche, wie Starkstrom, Nachrichtentechnik mit kupfernen oder optischen Übertragungselementen eingesetzt werden.

Die Erfindung wird nun anhand von vierzehn Figuren näher erläutert.
- Figur 1: zeigt eine prinzipielle Anordnung mit einer Einführung gemäß der Erfindung.
- Figur 2: zeigt ein Dichtungsformstück in perspektivischer Ansicht.
- Figur 3: zeigt das Dichtungsformstück in Seitenansicht.
- Figur 4: zeigt das Dichtungsformstück in Frontansicht.
- Figur 5: zeigt einen halben Wärmeleitkörper in Längsansicht.
- Figur 6: zeigt den Querschnitt des Wärmeleitkörpers nach Figur 5 im Schnittbereich VI-VI.
- Figur 7: zeigt den Querschnitt des Wärmeleitkörpers nach Figur 5 im Schnittbereich VII-VII.
- Figur 8: zeigt die Einführung von zwei Gegenständen mit extrem unterschiedlichen Durchmessern im ungeschrumpften Zustand der Umhüllung.
- Figur 9: zeigt eine Einführung wie Figur 8 im bereits angeschrumpften Zustand der Umhüllung.
- Figur 10: zeigt eine Einführung von Gegenständen nahezu gleicher Durchmesser im angeschrumpften Zustand der Umhüllung.
- Figur 11: zeigt eine Einführung von Gegenständen mit großen und nahezu gleichen Durchmessern im angeschrumpften Zustand der Umhüllung.
- Figur 12: zeigt ein Dichtungsformstück, das einen U-förmigen Wärmeleitkörper aufweist.
- Figur 13: zeigt das Prinzip eines U-förmigen Wärmeleitkörpers mit räumlich beweglichem Verbundglied zwischen den Schenkeln.
- Figur 14: zeigt das Prinzip eines U-förmigen Wärmeleitkörpers mit einer Gelenkverbindung zwischen den beiden Schenkeln.

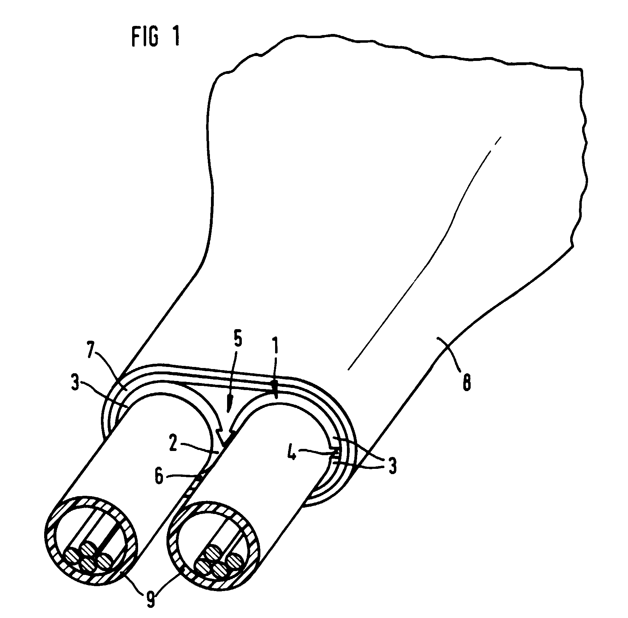

Die Figur 1 zeigt den Einsatz eines Dichtungsformstückes 1 im Stirnbereich einer schrumpfbaren Umhüllung 8, bei der zum Beispiel zwei langgestreckte Gegenstände, hier zwei Kabel 9, eingeführt werden. Der zwischen den langgestreckten Gegenständen befindliche Zwickelbereich wird mit dem erfindungsgemäßen Dichtungsformstück 1 im Endzustand dichtend ausgefüllt, wie diese Figur 1 zeigt. Dieses Dichtungsformstück 1 besteht aus einem bei Wärmezufuhr schmelzbaren bzw. verformbaren Material, vorzugsweise aus einem Heißschmelzkleber wie Polyamid.

Im Urzustand wird das Dichtungsformstück aus zwei gegeneinander gestellten, C-förmigen Lamellenkörpern 3 gebildet. In jede öffnung einer solchen C-Form mit jeweils einem längsverlaufenden Schlitz 4 ist ein langgestreckter Gegenstand einführbar. Aufgrund der bereits durchgeführten Schrumpfung hat bereits die erforderliche Verformung und damit auch die Abdichtung stattgefunden, so daß sich die dargestellte Endform gebildet hat. Die beiden Wärmeleitkörper 5 und 6, die zwischen den C-förmigen Lamellenkörpern 3 liegen, haben dabei die Wärmeleitung ins Innere des Dichtteils bewirkt. Außerdem ist dargestellt, daß die schrumpfbare Umhüllung 8 auch eine Innenbeschichtung 7 aus Schmelzkleber aufweist, die ebenfalls durch Wärmezufuhr geschmolzen ist und zur Abdichtung beiträgt. Dabei ist ersichtlich, daß die Wärmeleitkörper 5 und 6 mit entsprechenden Fortsätzen bis zum Mittelstück 2 des Dichtteiles 2-3 hineinreichen. Die Einzelheiten des Dichtungsformstückes 1 werden nun im einzelnen näher erläutert.

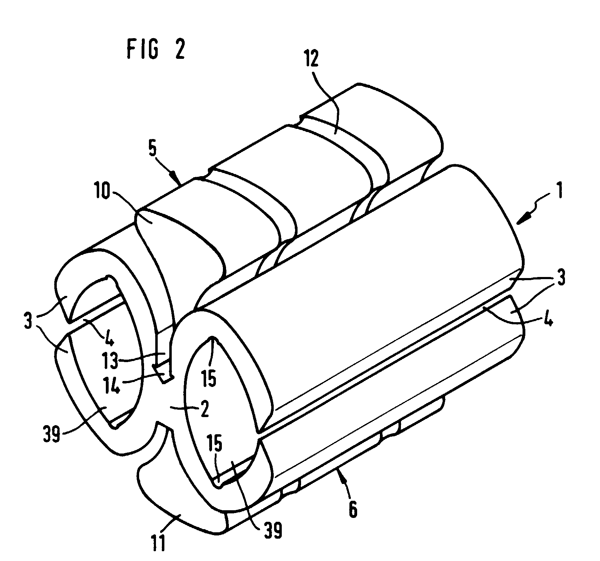

Die Figur 2 verdeutlicht das Dichtungsformstück 1, das aus dem Dichtteil 2-3 und den in diesem Fall aus zwei Teilkörpern bestehenden Wärmeleitkörpern 5 und 6 gebildet wird. Das Dichtungsteil 2-3 besteht aus zwei gegeneinander gestellten, C-förmigen Lamellenkörpern 3 aus wärmeschmelzbarem Material, wobei deren Enden nach einwärts gerichtet sind, um die eingeführten Gegenstände zu fixieren bzw. das Dichtungsformstück 1 in seiner Montagelage zu sichern. Die einzelnen lamellenartigen Enden des Doppel-C-Lamellenkörpers 3 sind relativ elastisch und dadurch bewegbar, so daß die Enden den Durchmessern der eingeführten Gegenstände durch Aufspreizen angepaßt werden können. Die beiden C-förmigen Lamellenkörper 3 bilden im gegenseitigen Berührungspunkt ein Mittelstück 2 oder sind über ein gemeinsames Mittelstück 2 miteinander verbunden. Im Mittelstück 2 sind nun zwei (hier nur eine sichtbar) bis zum Zentrum reichende Klemmnuten 13 angeordnet, die vorzugsweise Hinterschneidungen 14 aufweisen. In diese Klemmnuten 13 werden die Wärmeleitkörper 5 bzw. 6 mit jeweils einem Fortsatz klemmend eingeschoben. Bei diesem Einführungsbeispiel handelt es sich um eine Ausgestaltung mit zwei voneinander getrennten Wärmeleitkörpern 5 und 6, die jeweils in ihrer Klemmnut 13 fixiert werden. Diese Klemmnuten 13 führen von beiden Enden des Dichtteils 2-3 her bis fast zur Mitte und sind voneinander getrennt, so daß das Mittelstück 2 in seinem Mittelbereich durchgehend aus wärmeschmelzbarem Material besteht. Dabei verlaufen diese Klemmnuten 13 zusätzlich seitenverkehrt, das heißt die eine Teilklemmnut 13 verläuft im oberen Zwickelbereich und die andere Teilklemmnut 13 im unteren Zwickelbereich des Dichtteiles 2-3. Die Fortsätze (hier nicht sichtbar) der Wärmeleitkörper 5 bzw. 6 erstrecken sich somit nicht durchgehend über die gesamte Länge des Dichtungsformstückes 1 sondern jeweils nur über die Länge ihrer Teilklemmnut 13. Die dreieckförmigen Bereiche 10 und 11 erstrecken sich jedoch über die ganze Länge des Dichtungsformstückes 1, wenn nicht Verkürzungen bzw. Verlängerungen vorgesehen werden, wie bereits oben angedeutet worden ist. Weiterhin sind die Wärmeleitkörper 5 bzw. 6 in ihren dreieckförmigen Bereichen 10 bzw. 11 mit querverlaufenden Nuten 12 versehen, durch die besonders starke Dichtungsmittelreservate gebildet sind. Dies dient einerseits zur Verbesserung und Sicherung der Dichtung in Längsrichtung wie auch andererseits einer Lagefixierung und Sicherung gegen längsgerichtete Krafteinwirkungen.

In den längsgerichteten Aussparungen 39 der C-förmigen Lamellenkörper 3 sind längsverlaufende Knicknuten 15 eingelassen, durch die das Aufbiegen beim Anpassen der Öffnungen 39 erleichtert wird. In diesem Fall sind die Enden der C-förmigen Lamellenkörper 3 so weit zusammengezogen, daß sie sich im Schlitz 4 berühren.

Die Klemmnuten 13 sind an ihren inneren Enden jeweils mit Hinterschneidungen 14 versehen, die hier beispielsweise in Dreiecksform ausgebildet sind. Die Fortsätze (hier nicht sichtbar) der Wärmeleitkörper 5 bzw. 6 weisen korrespondierende Formgestaltungen auf, so daß sich eine gegenseitige Verhakung und Fixierung ergibt.

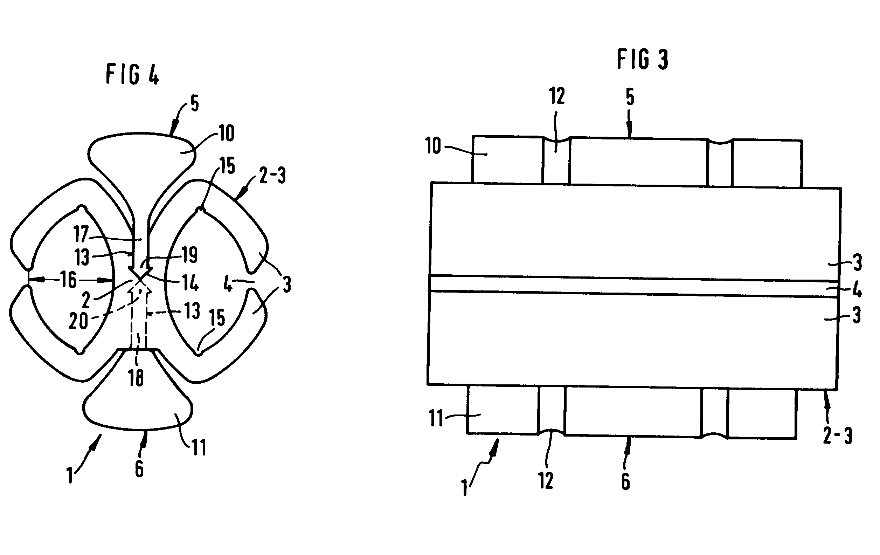

Die Figur 3 verdeutlicht nun die Ausbildung des Dichtungsformstückes 1 in Seitenansicht, wobei hier besonders die C-förmigen Lamellenkörper 3, die im Schlitz 4 zusammentreffen, und die Längsanordnung der Wärmeleitkörper 5 bzw. 6 in Erscheinung treten. Von den Wärmeleitkörpern 5 und 6 sind nur die dreieckförmigen Bereiche 10 und 11 sichtbar, in in denen sich die quer verlaufenden Nuten 12 befinden. In diesem Beispiel erstrecken sich die Wärmeleitkörper 5 und 6 nicht bis zu den Enden des Dichtteiles 2-3.

Figur 4 zeigt das gleiche Dichtungsformstück 1 in Frontansicht und verdeutlicht die gegeneinander gestellte Anordnung der beiden C-förmigen Lamellenkörper 3, deren Enden jeweils nach einwärts gerichtet sind und somit federnde Elemente für die Fixierung der eingeführten Gegenstände bilden. Dabei ist der Abstand 16 von den Enden bis zur Innenwandung des Mittelstückes 2 so gewählt, daß gerade noch der Gegenstand mit dem minimal zulässigen Durchmesser klemmend fixiert werden kann. Außerdem verlaufen Knicknuten 15 in Längsrichtung der Aussparungen 39. Im Mittelstück 2 des Dichtteiles 2-3 sind die beiden entgegengesetzten Teilklemmnuten 13 erkennbar, wobei die eine, rückwärtige Teilklemmnut 13 gestrichelt angedeutet ist, da sie nicht sichtbar ist. In diese Teilklemmnuten 13 sind nun von beiden Enden des Dichtteiles 2-3 her die Wärmeleitkörper 5 bzw. 6 eingeführt, die jedoch nur Teilfortsätze 17 bzw. 18 (gestrichelt gezeichnet, da nicht sichtbar) aufweisen. Die dreieckförmigen Bereiche 10 und 11 der Wärmeleitkörper 5 und 6 erstrecken sich in den Zwickelbereichen des Dichtteiles 2-3 und verbreitern sich nach auswärts, wobei die bereits beschriebenen Wölbungen der Seitenflächen sichtbar sind. Aus dieser Figur 4 wird deutlich, daß sich die beiden Wärmeleitkörper 5 und 6 im verformbaren Zustand des Dichtteiles 2-3 gegeneinander bewegen können, ohne daß sie sich gegenseitig berühren. Auf diese Weise ist eine optimale Lageanpassung möglich. Die Höhe der beiden Wärmeleitkörper 5 bzw. 6 ist jeweils so gewählt, daß sich nach der vollendeten Formanpassung des gesamten Dichtungsformstückes ein nahezu tangentialer Verlauf der Umhüllung zwischen den eingeführten Gegenständen ergibt.

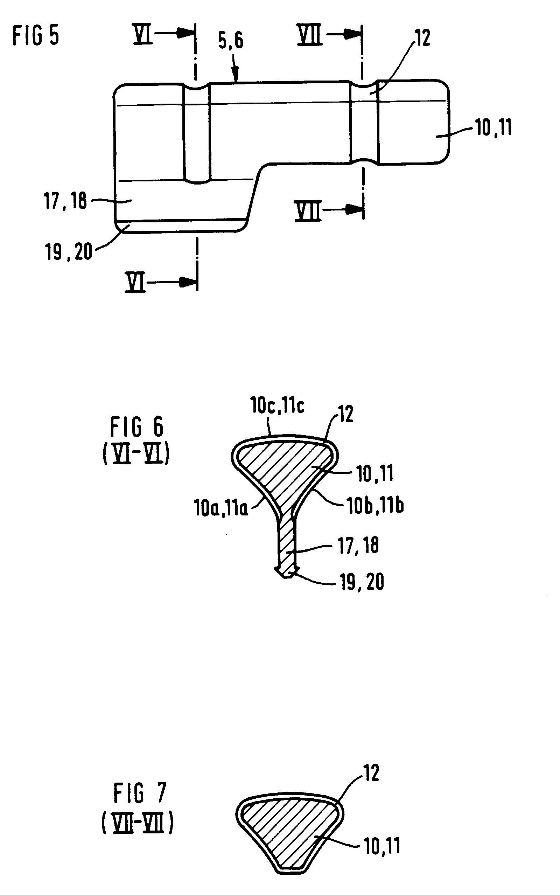

Die Figur 5 zeigt einen der beiden Wärmeleitkörper 5 bzw. 6 des vorher gezeigten Ausführungsbeispiels. Dieser Wärmeleitkörper besteht aus einem in der Länge durchgehenden Bereich 10 bzw. 11 und aus einem angeformten Fortsatz 17 bzw. 18, der sich nur über einen Teilbereich erstreckt. Am unteren Ende des Fortsatzes 17 bzw. 18 ist die der Hinterschneidung der Klemmnut angepaßte Ausformung 19 bzw. 20 sichtbar, die in diesem Fall dreiecksförmig gestaltet ist. Die quer verlaufenden Nuten 12 sind ebenfalls sichtbar.

Die Figur 6 zeigt den Querschnitt des Wärmeleitkörpers 5 bzw. 6 im Schnittbereich VI-VI der Figur 5. Hier wird die Ausgestaltung des Fortsatzes 17 bzw. 18 mit seiner Formanpassung 19 bzw. 20 deutlich. Die beiden Seitenflächen 10a bzw. 11a und 10b bzw. 11b sind nach einwärts gewölbt und dienen der Grobanpassung an die eingeführten Gegenstände. Die außen liegende Seitenwand 10c bzw. 11c ist nach auswärts gewölbt und dient der Grobanpassung an die geschrumpfte Umhüllung.

Die Figur 7 zeigt den Querschnitt des Wärmeleitkörpers nach Figur 5 im dort angegebenen Schnittbereich VII-VII. Hier fehlt gegenüber dem Querschnitt nach Figur 6 lediglich der Fortsatz.

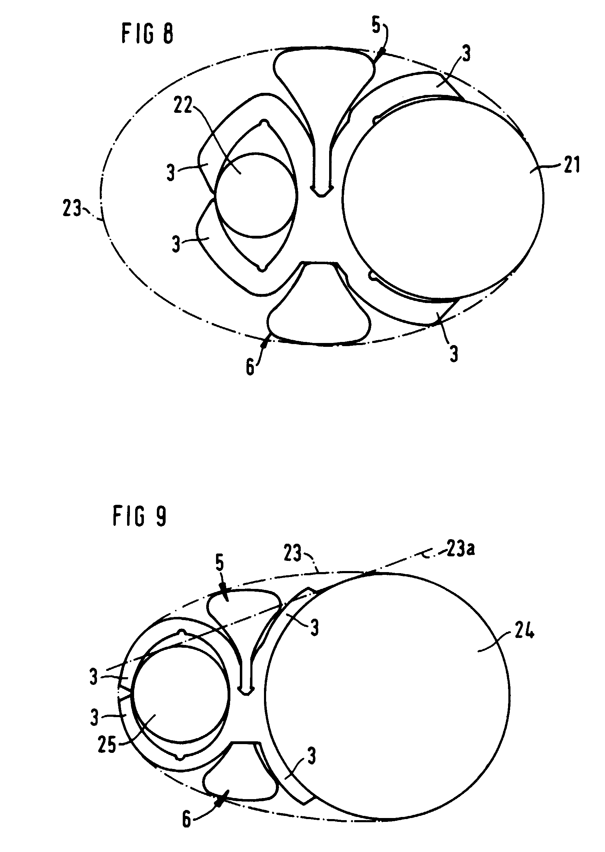

Die Figur 8 zeigt eine Einführungsanordnung gemäß der Erfindung im noch ungeschrumpften Zustand der Umhüllung. Es werden hier zwei Gegenstände 21 und 22 mit stark unterschiedlichen Durchmessern eingeführt, wobei bei dem Gegenstand 21 mit großem Durchmesser eine Aufspreizung der Enden des betreffenden Lamellenkörpers 3 erfolgen muß. Bei dem Gegenstand 22 mit minimalem, gerade noch zulässigen Durchmesser erfolgt gerade noch eine Fixierung durch die nach einwärts gerichteten Enden dieses Lamellenkörpers 3. Die Umhüllung 23 ist in ungeschnittenem Zustand angedeutet und es wird deutlich, daß bei der Montage dieses Endbereiches in diesem losen Zustand eine Fixierung des betreffenden Dichtungsformstückes 1 mit seinem Dichtteil 2-3 und seinem Lamellenkörper 3 inklusive der beiden Wärmeleitkörper 5 bzw. 6 auf den eingeführten Gegenständen sehr hilfreich bzw. nötig ist, um eine einwandfreie Fixierung während des Schrumpfvorganges gewährleisten zu können, zumal bei der einmal begonnenen Wärmezufuhr eine manuelle Korrektur nicht mehr möglich ist. Bei der Erwärmung zieht sich dann die Umhüllung 23 um das montierte Dichtungsformstück herum, wobei das ebenfalls erwärmte Dichtteil 2-3 so verformt wird, daß eine ausreichende Abdichtung zwischen den eingeführten Gegenständen und der Umhüllung entsteht.

Die Figur 9 zeigt eine Anordnung bei der Einführung von zwei Gegenständen 24 und 25 mit ebenfalls unterschiedlichen Durchmessern, doch ist der Gegenstand 25 mit dem kleineren Durchmesser noch voll im Bereich seines C-förmigen Lamellenkörpers 3, während der andere Lamellenkörper 3 wieder voll aufgespreizt ist. Angedeutet ist hier noch der endgültige Zustand der voll aufgeschrumpften Umhüllung 23, die beim Umformvorgang somit das Dichtteil 2-3 völlig verpreßt und damit die Wärmeleitkörper gegeneinander so verschiebt, daß insgesamt ein homogener Dichtabschluß gebildet wird. Dabei gibt die angedeutete Tangente 25 den endgültigen Verlauf der aufgeschrumpften Umhüllung 23 wieder.

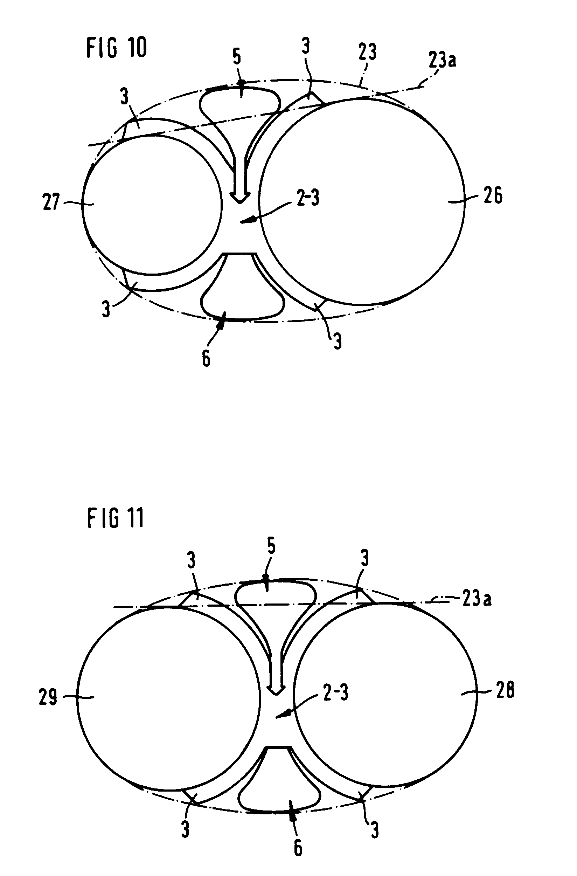

Die Figur 10 zeigt ein Ausführungsbeispiel mit Gegenständen nahezu gleicher Durchmesser, so daß beide C-Formen des Lamellenkörpers 3 aufgespreizt werden müssen. Auch hier nimmt die Umhüllung 23 im Endzustand die angedeutete Tangentenform an, wobei die entsprechende Umformung des Dichtungsformstückes erfolgt.

Die Figur 11 vermittelt die Verhältnisse bei Einführung von Gegenständen mit gleichen Durchmessern, so daß sich ein etwa symmetrischer Zustand einstellt, wobei die Verhältnisse je nach Durchmessergröße der Gegenstände den bereits vorher angegebenen Ausführungsbeispielen entsprechen. Auch hier erfolgt wie in den vorhergehenden Beispielen die entsprechende Zwangsverschiebung der Wärmeleitkörper 5 und 6 innerhalb des Zwickelbereichs wenn sich das Dichtteil 2-3 im vorformbaren Zustand befindet.

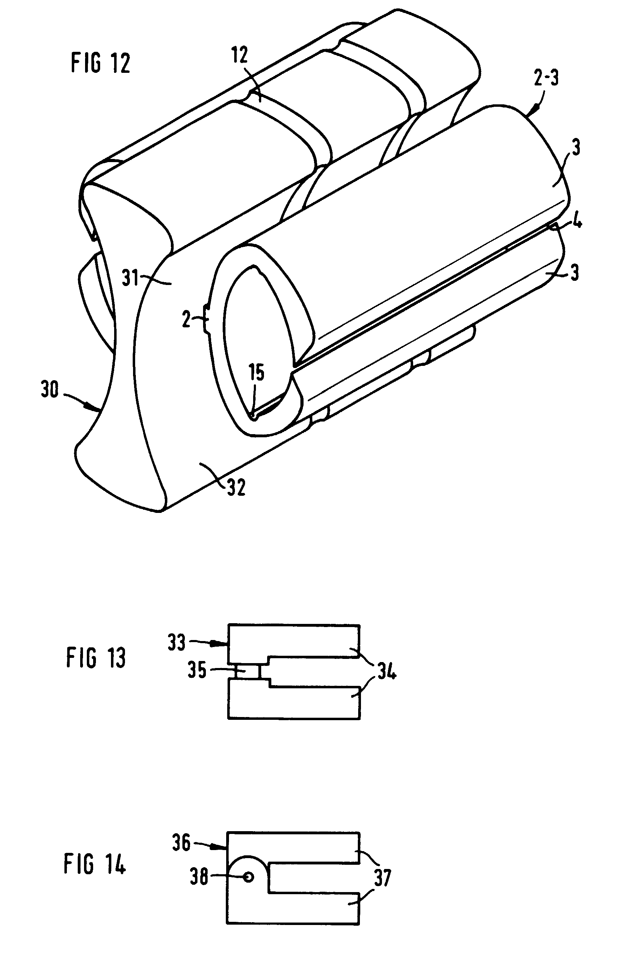

Die Figur 12 zeigt nun ein Ausführungsbeispiel gemäß der Erfindung, bei dem als Wärmeleitkörper 30 ein einziger Körper verwendet wird, wobei dieser U-förmig ausgebildet ist. Die beiden Schenkel 31 weisen etwa die Querschnittgestalt der vorher beschriebenen Wärmeleitkörper auf und erstrecken sich ebenfalls in den Zwickelbereichen des Dichtungsteiles 2-3 mit seinen C-förmigen Lamellenkörpern 3. Diese U-förmige Klammer 30 wird nun von einer Seite her ebenfalls in einer Klemmnut im Mittelstück 2 fixiert, so daß sich für die Montage insgesamt wiederum ein einziges Formteil ergibt. Die U-förmige Klammer 30 bleibt mit ihren beiden Schenkeln 31 und 32 innerhalb der Umhüllung, so daß sich letztendlich die gleichen Verhältnisse ergeben wie bei den vorangegangenen Ausführungsbeispielen. Die beiden Schenkel 31 und 32 dieser U-förmigen Klammer 30 können beispielsweise den gleichen Querschnitt aufweisen wie die Wärmeleitkörper 5 bzw. 6 der vorhergehenden Ausführungsbeispiele, so daß auch in diesem Fall eine Grobanpassung an die eingeführten Gegenstände erfolgt. Je nach Bedarf kann das Mittelstück 2 in Längsrichtung so weit ausgeschnitten werden, daß die Klammer entweder bündig oder auch tiefer in das Dichtteil 2-3 eingeschoben werden kann. Die Umhüllung schrumpft hier, wie auch bei allen anderen Ausführungen gemäß der Erfindung, völlig frei ohne äußere Einschnürung auf das Dichtungsformstück 1 auf und verformt dabei das wärmeschmelzbare Dichtteil 2-3 des Dichtungsformstückes 1.

Die Figur 13 zeigt ein Ausführungsbeispiel eines ebenfalls U-förmigen Wärmeleitkörpers 33, der allerdings ein bewegliches Verbindungsglied 35 enthält, durch das die beiden Schenkel 34 räumlich gegeneinander bewegbar sind. Auf diese Weise kann nun hier ebenfalls durch die bessere Beweglichkeit eine bessere Lageanpassung im Dichtungsbereich erfolgen. Dieser Wärmeleitkörper 33 wird in der gleichen Weise wie beim Ausführungsbeispiel nach Figur 12 in das Dichtteil 2-3 eingesetzt.

Die Figur 14 zeigt wiederum einen U-förmigen Wärmeleitkörper 36, bei dem die beiden Schenkel 37 die ebenfalls in die Klemmnut des Dichtungsteiles 2-3 eingeführt werden über ein Gelenk 38 zusammengefügt sind. Hier ist dann eine Formanpassung der Schenkel 37 in der senkrechten Ebene möglich.

Diese beiden letztgenannten Ausführungsbeispiele zeigen nur das Prinzip auf; denn die Ausgestaltungen der Schenkel usw. können wie bei den anderen Beispielen entsprechend gestaltet und angepaßt werden.

## Patentansprüche

1. Dichtungsformstück zur stirnseitigen Abdichtung einer wärmeschrumpfbaren Umhüllung für langgestreckte Gegenstände, bestehend aus einem Dichtteil (2-3) aus wärmeschmelzbarem Material und aus Wärmeleitkörpern (5,6,30,33,36) aus wärmeleitfähigem Material,
**dadurch gekennzeichnet,**
daß das Dichtteil (2-3) aus zwei Lamellenkörpern (3) und einem Mittelstück (2) besteht, daß die Lamellenkörper (3) C-förmigen Querschnitt zur Aufnahme der langgestreckten Gegenstände aufweisen und gegeneinanderliegend mit ihren Rückseiten das Mittelstück (2) bilden, daß die Enden der Lamellenkörper (3) jeweils nach einwärts gerichtet sind, daß im Mittelstück (2) mindestens eine von den zwischen den C-förmigen Lamellenkörpern (3) befindlichen Zwickelbereichen ausgehende und bis ins Zentrum reichende Klemmnut (13) angeordnet ist, daß mindestens ein Wärmeleitkörper (5, 6, 30, 33, 36) in der Klemmnut (13) fixierbar ist, daß der Wärmeleitkörper (5, 6, 30, 33, 36) sich über die Länge des Dichtungsformstückes (1) hinweg zumindest teilweise erstreckt, daß der Wärmeleitkörper (5, 6, 30, 33, 36) im Zwickelbereich zwischen den C-förmigen Lamellenkörpern (3) einen Querschnitt aufweist, der sich vom äußeren Umfang des Dichtungsformstückes (1) her zum Zentrum des Mittelstückes (2) des Dichtteils (2-3) hin verjüngt, daß das verjüngte Ende des Wärmeleitkörpers (5, 6, 30, 33, 36) im Bereich der Klemmnut (13) einen Fortsatz (17, 18) aufweist, der der Querschnittsform der Klemmnut (13) angepaßt ist.

2. Dichtungsformstück nach Anspruch 1,
**dadurch gekennzeichnet,**
daß der Wärmeleitkörper (5, 6, 30, 33, 36) im Zwickelbereich dreieckförmigen Grundquerschnitt aufweist.

3. Dichtungsformstücknach Anspruch 2,
**dadurch gekennzeichnet,**
daß die beiden gegenüberliegenden Seitenwände (10a, 10b, 11a, 11b) nach einwärts und die außen liegende Seitenwand (10c, 11c) nach auswärts bogenförmig gewölbt sind und daß der Fortsatz (17, 18) an der innenliegenden Dreieckspitze angeordnet ist.

4. Dichtungsformstück nach einem der vorhergehenden Ansprüche,
**dadurch gekennzeichnet,**
daß die Lamellenenden des Lamellenkörpers (3) so weit nach einwärts gezogen sind, daß die in die Aussparungen (39) einzuführenden langgestreckten Gegenstände (22, 25) mit minimal zulässigem Durchmesser gerade noch fixierbar sind, jedoch so aufdehnbar sind, daß langgestreckte Gegenstände (9, 21, 24, 25, 26, 27, 28, 29) mit maximal zulässigem Durchmesser noch erfaßbar sind.

5. Dichtungsformstück nach einem der vorhergehenden Ansprüche,
**dadurch gekennzeichnet,**
daß die Klemmnut (13) eine Hinterschneidung (14) aufweist und daß der Fortsatz (17, 18) des Wärmeleitkörpers (5, 6, 30, 33, 36) einen korrespondierenden Querschnitt aufweist.

6. Dichtungsformstück nach Anspruch 5,
**dadurch gekennzeichnet,**
daß die Hinterschneidung (14) der Klemmnut (13) eine Dreieckform aufweist.

7. Dichtungsformstück nach einem der vorhergehenden Ansprüche,
**dadurch gekennzeichnet,**
daß der Wärmeleitkörper (5, 6, 30, 33, 36) auf seiner Oberfläche quer zur Längsrichtung verlaufende Nuten (12) aufweist.

8. Dichtungsformstück nach einem der vorhergehenden Ansprüche,
**dadurch gekennzeichnet,**
daß die C-förmigen Lamellenkörper (3) auf der Innenseite längsverlaufende Knicknuten (15) aufweisen.

9. Dichtungsformstück nach einem der vorhergehenden Ansprüche,
**dadurch gekennzeichnet,**
daß zwei Teilklemmnuten (13) angeordnet sind, die sich jeweils von einem stirnseitigen Ende des Dichtteils (2-3) bis kurz vor die Mitte des Dichtteils (2-3) erstrecken, wobei die eine Teilklemmnut (13) im oberen Zwickelbereich und die andere Teilklemmnut (13) im unteren Zwickelbereich des Dichtteils (2-3) verläuft.

10. Dichtungsformstück nach Anspruch 9,
**dadurch gekennzeichnet,**
daß zwei voneinander getrennte Wärmeleitkörper (5, 6) eingesetzt sind, wobei jeder Fortsatz der Wärmeleitkörper (5, 6) als Teilfortsatz (17,18) nur die Länge der Teilklemmnut (13) hat und daß die Wärmeleitkörper (5, 6) mit der vollen Länge ihrer dreieckförmigen Bereiche (10, 11) gegeneinander von den Enden des Dichtteils (2-3) her aufgeschoben sind.

11. Dichtungsformstück nach einem der Ansprüche 1 bis 8,
**dadurch gekennzeichnet,**
daß der Wärmeleitkörper (30, 33, 36) U-Form aufweist und auf das Mittelstück (2) des Dichtteils (2-3) zwischen den C-förmigen Lamellenkörpern (3) aufschiebbar ist.

12. Dichtungsformstück nach Anspruch 11,
**dadurch gekennzeichnet,**
daß die Schenkel (31, 32, 34, 37) des U-förmigen Wärmeleitkörpers (30, 33, 36) in den Zwickelbereichen des Dichtteils (2-3) dreieckförmigen Querschnitt mit bogenförmig gewölbten Außenflächen aufweist.

13. Dichtungsformstück nach einem der Ansprüche 11 oder 12,
**dadurch gekennzeichnet,**
daß die Schenkel (34, 37) des Wärmeleitkörpers (33, 36) gegeneinander beweglich verbunden sind.

14. Dichtungsformstück nach Anspruch 13,
**dadurch gekennzeichnet,**
daß ein elastisches Zwischenstück (38) die Schenkel (37) verbindet.

15. Dichtungsformstück nach Anspruch 16,
**dadurch gekennzeichnet,**
daß ein Gelenk (38) die Schenkel (37) verbindet.

16. Dichtungsformstück nach einem der vorhergehenden Ansprüche,
**dadurch gekennzeichnet,**
daß das Dichtteil (2-3) aus wärmeschmelzbarem Kunststoffkleber besteht.

17. Dichtungsformstück nach Anspruch 18,
**dadurch gekennzeichnet,**
daß der wärmeschmelzbare Kleber Polyamid ist.

18. Dichtungsformstück nach einem der vorhergehenden Ansprüche,
**dadurch gekennzeichnet,**
daß der Wärmeleitkörper (5, 6, 30, 33, 36) aus einem Metall besteht.

19. Dichtungsformstück nach Anspruch 18,
**dadurch gekennzeichnet,**
daß der Wärmeleitkörper (5, 6, 30, 33, 36) aus Aluminium besteht.

20. Dichtungsformstück nach einem der vorhergehenden Ansprüche,
**dadurch gekennzeichnet,**
daß die eingeführten, langgestreckten Gegenstände (28, 29) gleichen Durchmesser aufweisen.

21. Dichtunsformstück nach einem der Ansprüche 1 bis 19,
**dadurch gekennzeichnet,**
daß die eingeführten, langgestreckten Gegenstände (21-22, 24-25, 26-27) ungleichen Durchmesser aufweisen.

22. Dichtungsformstück nach einem der Ansprüche 20 oder 21,
**dadurch gekennzeichnet,**
daß die eingeführten Gegenstände (21, 22, 24, 25, 26, 27, 28, 29) Kabel sind.

23. Dichtungsformstück nach einem der Ansprüche 20 oder 21,
**dadurch gekennzeichnet,**
daß die eingeführten Gegenstände (21, 22, 24, 25, 26, 27, 28, 29) Rohre sind.

24. Dichtungsformstück nach einem der vorhergehenden Ansprüche,
**dadurch gekennzeichnet,**
daß die Umhüllung (8, 23) eine Innenbeschichtung (7) aus Schmelzkleber aufweist.

25. Dichtungsformstück nach Anspruch 24,
**dadurch gekennzeichnet,**
daß die Innenbeschichtung (7) der Umhüllung (8, 23) und das schmelzbare Material des Dichtteils (2-3) gleichen Schmelzpunkt aufweisen.

26. Dichtungsformstück nach Anspruch 24,
**dadurch gekennzeichnet,**
daß der Schmelzpunkt der Innenbeschichtung (7) der Umhüllung (8, 23) höher ist als der Schmelzpunkt des Materials des Dichtteils (2-3).

27. Dichtungsformstück nach einem der vorhergehenden Ansprüche,
**dadurch gekennzeichnet,**
daß die Umhüllung (8, 23) jeweils zwischen den eingeführten, langgestreckten Gegenständen (9-9, 21-22, 24-25, 26-27, 28-29) im endgültig geschrumpften Zustand als Tangente (25) verläuft.

## Claims

1. Sealing moulding for sealing off the end of a heat-shrinkable sheathing for elongate articles, comprising a sealing part (2-3) of heat-meltable material and heat conductors (5, 6, 30, 33, 36) of heat-conductive material, characterized in that the sealing part (2-3) comprises two lamellar elements (3) and a middle piece (2), in that the lamellar elements (3) have a C-shaped cross-section for receiving the elongate articles and, lying against each other with their rear sides, form the middle piece (2), in that the ends of the lamellar elements (3) in each case are directed inwards, in that there is arranged in the middle piece (2) at least one clamping groove (13), extending from the interstitial regions, located between the C-shaped lamellar elements (3), and reaching as far as the centre, in that at least one heat conductor (5, 6, 30, 33, 36) can be fixed in the clamping groove (13), in that the heat conductor (5, 6, 30, 33, 36) extends at least partially beyond the length of the sealing moulding (1), in that the heat conductor (5, 6, 30, 33, 36) has in the interstitial region between the C-shaped lamellar elements (3) a cross-section which tapers from the outer circumference of the sealing moulding (1) towards the centre of the middle piece (2) of the sealing part (2-3), and in that the tapered end of the heat conductor (5, 6, 30, 33, 36) has in the region of the clamping groove (13) a continuation (17, 18) which is adapted to the cross-sectional shape of the clamping groove (13).

2. Sealing moulding according to Claim 1, characterized in that the heat conductor (5, 6, 30, 33, 36) has in the interstitial region a triangular basic cross-section.

3. Sealing moulding according to Claim 2, characterized in that the two opposing side walls (10a, 10b, 11a, 11b) are arcuately curved inwards and the outer side wall (10c, 11c) is arcuately curved outwards and in that the continuation (17, 18) is arranged at the inner tip of the triangle.

4. Sealing moulding according to one of the preceding claims, characterized in that the lamella ends of the lamellar element (3) are drawn inwards to such an extent that the elongate articles (22, 25) of the minimum permissible diameter to be inserted into the openings (39) can just be fixed still, but can be expanded such that elongate articles (9, 21, 24, 25, 26, 27, 28, 29) of the maximum permissible diameter can still be accommodated.

5. Sealing moulding according to one of the preceding claims, characterized in that the clamping groove (13) has an undercut (14) and in that the continuation (17, 18) of the heat conductor (5, 6, 30, 33, 36) has a corresponding cross-section.

6. Sealing moulding according to Claim 5, characterized in that the undercut (14) of the clamping groove (13) has a triangular shape.

7. Sealing moulding according to one of the preceding claims, characterized in that the heat conductor (5, 6, 30, 33, 36) has on its surface grooves (12) running transversely to the longitudinal direction.

8. Sealing moulding according to one of the preceding claims, characterized in that the C-shaped lamellar elements (3) have on the inner side longitudinally running buckling grooves (15).

9. Sealing moulding according to one of the preceding claims, characterized in that there are arranged two part-clamping-grooves (13), which respectively extend from one face end of the sealing part (2-3) up to shortly before the middle of the sealing part (2-3), the one part-clamping-groove (13) running in the upper interstitial region and the other part-clamping-groove (13) running in the lower interstitial region of the sealing part (2-3).

10. Sealing moulding according to Claim 9, characterized in that two heat conductors (5, 6), separate from each other, are used, each continuation of the heat conductors (5, 6), as a part-continuation (17, 18), having only the length of the part-clamping-groove (13) and in that the heat conductors (5, 6) are pushed with the full length of their triangular regions (10, 11) towards each other from the ends of the sealing part (2-3).

11. Sealing moulding according to one of Claims 1 to 8, characterized in that the heat conductor (30, 33, 36) has a U-shape and can be pushed onto the middle piece (2) of the sealing part (2-3) between the C-shaped lamellar elements (3).

12. Sealing moulding according to Claim 11, characterized in that the legs (31, 32, 34, 37) of the U-shaped heat conductor (30, 33, 36) have in the interstitial regions of the sealing part (2-3) a triangular cross-section with arcuately curved outer faces.

13. Sealing moulding according to one of Claims 11 or 12, characterized in that the legs (34, 37) of the heat conductor (33, 36) are connected movably towards each other.

14. Sealing moulding according to Claim 13, characterized in that a flexible intermediate piece (35) connects the legs (34).

15. Sealing moulding according to Claim 13, characterized in that a hinge (38) connects the legs (37).

16. Sealing moulding according to one of the preceding claims, characterized in that the sealing part (2-3) consists of heat-meltable plastic adhesive.

17. Sealing moulding according to Claim 16, characterized in that the heat-meltable adhesive is polyamide.

18. Sealing moulding according to one of the preceding claims, characterized in that the heat conductor (5, 6, 30, 33, 36) consists of a metal.

19. Sealing moulding according to Claim 18, characterized in that the heat conductor (5, 6, 30, 33, 36) consists of aluminium.

20. Sealing moulding according to one of the preceding claims, characterized in that the inserted, elongate articles (28, 29) have the same diameter.

21. Sealing moulding according to one of Claims 1 to 19, characterized in that the inserted, elongate articles (21-22, 24-25, 26-27) have different diameters.

22. Sealing moulding according to one of Claims 20 and 21, characterized in that the inserted articles (9, 21, 22, 24, 25, 26, 27, 28, 29) are cables.

23. Sealing moulding according to one of Claims 20 and 21, characterized in that the inserted articles (21, 22, 24, 25, 26, 27, 28, 29) are pipes.

24. Sealing moulding according to one of the preceding claims, characterized in that the sheathing (8, 23) has an inner coating (7) of hot-melt adhesive.

25. Sealing moulding according to Claim 24, characterized in that the inner coating (7) of the sheathing (8, 23) and the meltable material of the sealing part (2-3) have the same melting point.

26. Sealing moulding according to Claim 24, characterized in that the melting point of the inner coating (7) of the sheathing (8, 23) is higher than the melting point of the material of the sealing part (2-3).

27. Sealing moulding according to one of the preceding claims, characterized in that, in the finally shrunk state, the sheathing (8, 23) in each case runs as a tangent (25) between the inserted, elongate articles (9-9, 21-22, 24-25, 26-27, 28-29).

## Revendications

1. Pièce moulée formant dispositif d'étanchéité pour rendre étanche du côté frontal une enveloppe thermorétractable destinée à des objets oblongs, constituée d'une pièce (2-3) d'étanchéité en matériau fusible et d'éléments (5, 6, 30, 33, 36) thermoconducteurs en matériau thermoconducteur,
caractérisée en ce que
la pièce (2-3) d'étanchéité est constituée de deux éléments (3) lamellaires et d'une pièce (2) centrale, en ce que les éléments (3) lamellaires ont une section transversale en forme de C pour la réception des objets oblongs et forment la pièce (2) centrale en étant accolés par leur faces arrières, en ce que les extrémités des éléments (3) lamellaires sont dirigées vers l'intérieur, en ce qu'il est ménagé dans la pièce (2) centrale au moins une rainure (13) de blocage qui part des zones de gousset se trouvant entre les éléments (3) lamellaires en forme de C et qui va jusqu'au centre, en ce qu'au moins un élément (5, 6, 30, 33, 36) thermoconducteur peut être immobilisé dans la rainure (13) de blocage, en ce que l'élément (5, 6, 30, 33, 36) thermoconducteur s'étend au moins en partie au-delà de la longueur de la pièce (1) moulée formant dispositif d'étanchéité, en ce que l'élément (5, 6, 30, 33, 36) thermoconducteur a dans la zone de gousset entre les éléments (3) lamellaires en forme de C une section transversale qui se rétrécit du pourtour extérieur de la pièce (1) moulée formant dispositif d'étanchéité au centre de la pièce (2) centrale de la pièce (2-3) d'étanchéité, en ce que l'extrémité rétrécie de l'élément (5, 6, 30, 33, 36) thermoconducteur comporte dans la zone de la rainure (13) de blocage un prolongement (17, 18) qui est adapté à la forme de section transversale de la rainure (13) de blocage.

2. Pièce moulée formant dispositif d'étanchéité suivant la revendication 1,
caractérisée en ce que
l'élément (5, 6, 30, 33, 36) thermoconducteur a dans la zone de gousset une section transversale de base triangulaire.

3. Pièce moulée formant dispositif d'étanchéité suivant la revendication 2,
caractérisée en ce que
les deux parois (10a, 10b, 11b, 11a) latérales opposées sont incurvées vers l'intérieur et la paroi (10c, 11c) latérale se trouvant à l'extérieur vers l'extérieur, et en ce que le prolongement (17, 18) est disposé au sommet du triangle se trouvant à l'intérieur.

4. Pièce moulée formant dispositif d'étanchéité suivant l'une des revendications précédentes,
caractérisée en ce que
les extrémités des éléments lamellaires en forme de C sont repliées vers l'intérieur sur une distance telle que les objets oblongs à introduire dans les évidements (39) ayant un diamètre minimum autorisé peuvent être encore juste immobilisés, mais peuvent être dépliées de manière à pouvoir encore saisir des objets (9, 21, 24, 25, 26, 27, 28, 29) oblongs ayant un diamètre maximum autorisé.

5. Pièce moulée formant dispositif d'étanchéité suivant l'une des revendications précédentes,
caractérisée en ce que
la rainure (13) de blocage comporte une contre-dépouille (14) et en ce que le prolongement (17, 18) de l'élément (5, 6, 30, 33, 36) thermoconducteur a une section transversale correspondante.

6. Pièce moulée formant dispositif d'étanchéité suivant la revendication 5,
caractérisée en ce que
la contre-dépouille (14) de la rainure (13) de blocage a une forme triangulaire.

7. Pièce moulée formant dispositif d'étanchéité suivant l'une des revendications précédentes,
caractérisée en ce que
l'élément (5, 6, 30, 33, 36) thermoconducteur comporte à sa surface des rainures (12) s'étendant transversalement à la direction longitudinale.

8. Pièce moulée formant dispositif d'étanchéité suivant l'une des revendications précédentes,
caractérisée en ce que
les éléments (3) lamellaires en forme de C comportent sur leur face intérieure des rainures (15) de flexion s'étendant longitudinalement.

9. Pièce moulée formant dispositif d'étanchéité suivant l'une des revendications précédentes,
caractérisée en ce que
il est ménagé deux rainures (13) de blocage partielles, qui s'étendent chacune d'une extrémité frontale de la pièce (2-3) d'étanchéité jusqu'à un peu avant le centre de la pièce (2-3) d'étanchéité, l'une des rainures (13) de blocage partielle s'étend dans la zone de gousset supérieure et l'autre rainure (13) de blocage partielle s'étendant dans la zone de gousset inférieure de la pièce (2-3) d'étanchéité.

10. Pièce moulée formant dispositif d'étanchéité suivant la revendication 9,
caractérisée en ce que
l'on introduit deux éléments (5, 6) thermoconducteurs distincts, chaque prolongement des éléments (5, 6) thermoconducteurs n'ayant, en tant que prolongement (17, 18) partiel, que la longueur de la rainure (13) de blocage partielle, et en ce que les éléments (5, 6) thermoconducteurs sont, à partir des extrémités de la pièce (2-3) d'étanchéité, repoussés l'un vers l'autre par toute la longueur de leurs zones (10, 11) triangulaires.

11. Pièce moulée formant dispositif d'étanchéité suivant l'une des revendications 1 à 8,
caractérisée en ce que
l'élément (30, 33, 36) thermoconducteur a une forme en U et peut être repoussé sur la pièce (2) centrale de la pièce (2-3) d'étanchéité entre les éléments (3) lamellaires en forme de C.

12. Pièce moulée formant dispositif d'étanchéité suivant la revendication 11,
caractérisée en ce que,
dans les zones de gousset de la pièce (2-3) d'étanchéité, les branches (31, 32, 34, 37) de l'élément (30, 33, 36) thermoconducteur en forme en U ont une section transversale triangulaire à surfaces extérieures incurvées en forme d'arc.

13. Pièce moulée formant dispositif d'étanchéité suivant l'une des revendications 11 ou 12,
caractérisée en ce que
les branches (34, 37) de l'élément (30, 33, 36) thermoconducteur sont reliées l'une à l'autre de manière à être mobiles l'une par rapport à l'autre.

14. Pièce moulée formant dispositif d'étanchéité suivant la revendication 13,
caractérisée en ce que
une pièce (35) intermédiaire élastique relie les branches (34).

15. Pièce moulée formant dispositif d'étanchéité suivant la revendication 13,
caractérisée en ce que
une articulation relie les branches (37).

16. Pièce moulée formant dispositif d'étanchéité suivant l'une des revendications précédentes,
caractérisée en ce que
la pièce (2, 3) d'étanchéité est en colle fusible de matière plastique.

17. Pièce moulée formant dispositif d'étanchéité suivant la revendication 16,
caractérisée en ce que
la colle fusible est un polyamide.

18. Pièce moulée formant dispositif d'étanchéité suivant l'une des revendications précédentes,
caractérisée en ce que
l'élément (5, 6, 30, 33, 36) thermoconducteur est constitué d'un métal.

19. Pièce moulée formant dispositif d'étanchéité suivant la revendication 18,
caractérisée en ce que
l'élément (5, 6, 30, 33, 36) thermoconducteur est en aluminium.

20. Pièce moulée formant dispositif d'étanchéité suivant l'une des revendications précédentes,
caractérisée en ce que
les objets (28, 29) oblongs introduits ont un même diamètre.

21. Pièce moulée formant dispositif d'étanchéité suivant l'une des revendications 1 à 19,
caractérisée en ce que
les objets (21-22, 24-25, 26-27) oblongs introduits ont un diamètre qui n'est pas le même.

22. Pièce moulée formant dispositif d'étanchéité suivant l'une des revendications 20 ou 21,
caractérisée en ce que
les objets (9, 21, 22, 24, 25, 26, 27, 28, 29) oblongs introduits sont des câbles.

23. Pièce moulée formant dispositif d'étanchéité suivant l'une des revendications 20 ou 21,
caractérisée en ce que
les objets (21, 22, 24, 25, 26, 27, 28, 29) oblongs introduits sont des tubes.

24. Pièce moulée formant dispositif d'étanchéité suivant l'une des revendications précédentes,
caractérisée en ce que
l'enveloppe (8, 23) comporte un revêtement (7) intérieur en colle fusible.

25. Pièce moulée formant dispositif d'étanchéité suivant la revendication 24,
caractérisée en ce que
le revêtement (7) intérieur de l'enveloppe (8, 23) et le matériau fusible de la pièce (2, 3) d'étanchéité ont le même point de fusion.

26. Pièce moulée formant dispositif d'étanchéité suivant la revendication 24,
caractérisée en ce que
le point de fusion du revêtement (7) intérieur de l'enveloppe (8, 23) est plus élevé que le point de fusion du matériau de la pièce (2, 3) d'étanchéité.

27. Pièce moulée formant dispositif d'étanchéité suivant l'une des revendications précédentes,
caractérisée en ce que
l'enveloppe (8, 23), lorsqu'elle est définitivement rétrécie, s'étend de manière tangente (25) entre les objets (9-9, 21-22, 24-25, 26-27, 28-29) oblongs introduits.
